(19) Europäisches Patentamt
European Patent Office
Office européen des brevets

(11) Veröffentlichungsnummer: **0 059 259**
**B1**

(12) # EUROPÄISCHE PATENTSCHRIFT

(45) Veröffentlichungstag der Patentschrift: **21.12.83**

(51) Int. Cl.³: **C 07 F 9/38** // C11D3/36, C02F5/14

(21) Anmeldenummer: **81109405.1**

(22) Anmeldetag: **30.10.81**

(54) **Verfahren zur Herstellung von N-(Carboxy-alkyl)-1-amino-alkan-1,1-diphosphonsäuren und deren Alkalisalze.**

(30) Priorität: **28.02.81 DE 3107673**

(43) Veröffentlichungstag der Anmeldung: **08.09.82 Patentblatt 82/36**

(45) Bekanntmachung des Hinweises auf die Patenterteilung: **21.12.83 Patentblatt 83/51**

(84) Benannte Vertragsstaaten: **AT BE CH DE FR GB IT LI LU NL SE**

(56) Entgegenhaltungen:
**EP - A - 0 000 930**
**DE - B - 2 732 777**

(73) Patentinhaber: **Benckiser-Knapsack GmbH, Dr. Albert-Reimann-Strasse 2, D-6802 Ladenburg (DE)**

(72) Erfinder: **Auel, Theodor, Dr. Dipl.-Chem., Winzerstrasse 3, D-6803 Edingen-Neckarhausen (DE)**
Erfinder: **Leichner, Ludwig, Dr. Dipl.-Chem., Schlittweg 1, D-6905 Schriesheim (DE)**
Erfinder: **Spatz, Wilhelm, Talstrasse 125, D-6101 Reichelsheim (DE)**

(74) Vertreter: **Patentanwälte Zellentin, Zweibrückenstrasse 15, D-8000 München 2 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



BUNDESDRUCKEREI BERLIN

Verfahren zur Herstellung von N-(Carboxy-alkyl)-1-amino-alkan-1,1-diphosphonsäuren und deren Alkalisalze

Die Erfindung betrifft ein verbessertes Verfahren zur Herstellung von N-(Carboxy-alkyl)-1-amino-alkan-1,1-diphosphonsäuren der allgemeinen Formel

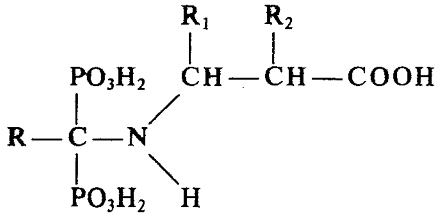

(I)

in der

R Wasserstoff oder niedrig Alkyl,
$R_1$ Wasserstoff oder niedrig Alkyl,
$R_2$ Wasserstoff oder niedrig Alkyl

bedeuten, bzw. deren Alkalisalzen oder Alkalisalzlösungen, mit dem sich diese Produkte in verbesserter Ausbeute und Reinheit und in höheren Konzentrationen bei verkürzter Reaktionszeit erhalten lassen.

Es sind bereits Verfahren zur Herstellung von N-(Carboxy-alkyl)-amino-alkan-polyphosphonsäuren und deren Alkalisalzen bekannt, die allgemein in einer Umsetzung von Amino-alkan-diphosphonsäuren im alkalischen Medium mit Formaldehyd und Alkalicyanid und anschließendem Verseifen der Nitril-Gruppe bestehen.

In der DE-B-2 732 777 wird die Herstellung von N-(Carboxy-alkyl)-1-amino-alkan-1,1-diphosphonsäuren durch Umsetzung von 1-Amino-alkan-1,1-diphosphonsäuren bei erhöhter Temperatur im alkalischen Medium mit ungesättigten Carbonsäuren beschrieben.

Nach diesem Verfahren werden pro Mol 1-Amino-alkan-1,1-diphosphonsäure bis zu 6 Mol Alkali-hydroxid eingesetzt. Die Umsetzung erfolgt mit verdünnten, wäßrigen Lösungen (Einsatzkonzentration des Alkali-hydroxids: max. 30%, Einsatzkonzentration der Carbonsäure: max. 50%). Hieraus resultieren Lösungen des Umsetzungsproduktes mit einem Gehalt von ca. 20% N-(Carboxy-alkyl)-1-amino-alkan-1,1-diphosphonsäure. Die Ausbeuten der nach diesem Verfahren herstellbaren Diphosphonsäuren liegen bei 70%, bezogen auf eingesetzte Amino-alkan-diphosphonsäure.

Die direkten Einsatzmöglichkeiten der so anfallenden Produkte sind aufgrund ihrer geringen Konzentration an Diphosphonsäure, ihres hohen Alkalianteils und unerwünschter Nebenprodukte begrenzt. Eine anschließende Reinigungs- und Konzentrierungsstufe ist erforderlich.

Gegenstand der vorliegenden Erfindung ist ein Verfahren zur Herstellung von N-(Carboxy-alkyl)-1-amino-alkan-1,1-diphosphonsäuren der allgemeinen Formel

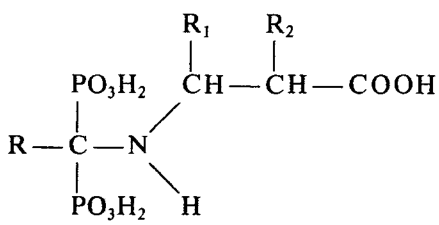

(I)

in welcher

R = Wasserstoff oder niedrig Alkyl,
$R_1$ = Wasserstoff oder niedrig Alkyl,
$R_2$ = Wasserstoff oder niedrid Alkyl

ist, bzw. deren Alkalisalzen oder Alkalisalzlösungen durch Umsetzen von 1-Amino-alkan-1,1-diphosphonsäuren der allgemeinen Formel

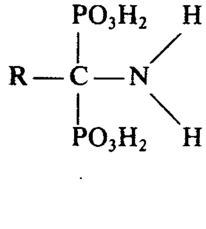

(II)

in welcher
R = Wasserstoff oder niedrig Alkyl
ist, mit ungesättigten Carbonsäuren der allgemeinen Formel

$$\begin{array}{lll} R_1 & R_2 & \\ | & | & \\ CH= & C- & COOH \end{array} \qquad (III)$$

in der $R_1$ und $R_2$ obige Bedeutung haben, das dadurch gekennzeichnet ist, daß man die Umsetzung in einem pH-Bereich von 5 bis 7 durchführt.

Hierdurch ist es möglich, Produkte höherer Konzentration, Ausbeute und Reinheit herzustellen, die direkt einsetzbar sind.

Unter niedrigen Alkylgruppen werden bevorzugt gerade oder verzweigte Alkylgruppen mit 1 bis 6 Kohlenstoffatomen verwendet. Besonders bevorzugt sind Verbindungen mit Methylresten.

Vorzugsweise setzt man Verbindungen der allgemeinen Formel II und eine ungesättigte Carbonsäure der allgemeinen Formel III im Molverhältnis von 1 : 1 bis 1 : 1,3 miteinander um.

Die Umsetzung wird im Vergleich zum Stand der Technik mit nur 2,5 bis 3,5 Mol Alkalihydroxid bzw. Alkalicarbonat pro Mol 1-Amino-alkan-1,1-diphosphonsäure (II) durchgeführt. Außerdem wird bei dieser Verfahrensweise für die Umsetzung weniger Wasser benötigt (7 bis 13 Mol Wasser pro Mol 1-Amino-alkan-1,1-diphosphonsäure). Die Reaktionszeiten sind deutlich niedriger.

Bei dem erfindungsgemäßen Verfahren wird ein Umsetzungsgrad der 1-Amino-alkan-1,1-diphosphonsäure von über 95% erreicht, wodurch die Bildung von Nebenprodukten wie Homo-Polymerisationsprodukten der eingesetzten Carbonsäuren gesenkt ist und damit eine höhere Reinheit erzielt wird.

Die Phosphonsäure-Konzentration im Endprodukt beträgt mindestens 40%. Noch höhere Konzentrationen lassen sich durch einfaches Abdestillieren von Wasser, vorzugsweise im unmittelbaren Anschluß an die Umsetzung, erreichen. Im Vergleich zum Stand der Technik erübrigt sich eine Reinigung und Isolierung der Produkte.

Die Umsetzung kann folgendermaßen durchgeführt werden: Die erforderliche Alkalimenge wird vorgelegt (z. B. in handelsüblicher Konzentration von 50%), Wasser und Phosphonsäure werden zugegeben, wodurch man eine rührfähige Suspension bzw. Lösung erhält. Anschließend wird die erforderliche Menge an ungesättigter Carbonsäure zudosiert und das Reaktionsgemisch bei Rückflußtemperatur gehalten. Die so erhaltenen Lösungen der Alkalisalze der N-(Carboxy-alkyl)-1-amino-alkan-1,1-diphosphonsäuren können direkt ohne Reinigung und Konzentrierung, z. B. als Komplexbildner für Metallionen auf den Gebieten der Wasseraufbereitung, der Textilbehandlung, der Zellstoff- und Papierherstellung und auf dem Waschmittelsektor eingesetzt werden.

Das in den nachfolgenden Beispielen angegebene Kalkbindevermögen wurde folgendermaßen bestimmt:

Die zu untersuchende Substanz wird in einen Meßkolben eingewogen und mit einer bestimmten Menge Wasser versetzt. Von dieser Lösung werden jeweils gleiche Mengen abpipettiert und mit unterschiedlichen Mengen an $CaCl_2$ und der jeweils gleichen Menge $Na_2CO_3$ versetzt. Durch Zugabe von NaOH oder HCl wird auf einen gewünschten pH-Wert eingestellt. Man erhält so beliebige Konzentrationsreihen. Die Proben werden erhitzt und zum Abkühlen stehengelassen. Das Kalkbindevermögen wird durch denjenigen Ansatz der Konzentrationsreihe dargestellt, bei dem gerade noch keine Trübung erfolgt ist.

## Beispiel 1

In 247,5 g 50%ige Kalilauge (2,21 Mol KOH, 6,88 Mol $H_2O$), verdünnt mit 60 g Wasser (3,33 Mol), werden unter Rühren 164,5 g 1-Amino-ethan-1,1-diphosphonsäure (0,80 Mol) als Feststoff eingetragen. Zu der resultierenden heißen Lösung werden 63,5 g Acrylsäure (0,88 Mol) zugegeben. Man erhitzt unter weiterem Rühren auf Rückflußtemperatur, bis eine klare Lösung entstanden ist, und hält die Lösung eine Stunde bei dieser Temperatur.

Molverhältnis: 1,0 Mol 1-Amino-ethan-1,1-diphosphonsäure
1,1 Mol Acrylsäure
2,7 Mol Kaliumhydroxid
12,7 Mol Wasser

Der Umsetzungsgrad, bezogen auf 1-Amino-ethan-1,1-diphosphonsäure, ist >95%. Es wird eine 40%ige Lösung mit einem pH-Wert von 6,7 erhalten. Das Kalkbindevermögen bei pH 10 beträgt 51 g Calcium pro 100 g in der Lösung enthaltener Phosphonsäure.

## Beispiel 2

In einem Rührkessel mit Rückflußkühler werden 450 kg 50%ige Kalilauge (4,01 kMol KOH, 12,50 kMol $H_2O$) und 105,5 kg Wasser (5,86 kMol) vorgelegt. Unter Rühren werden 299 kg 1-Amino-ethan-1,1-diphosphonsäure (1,46 kMol) eingetragen und anschließend 115,5 g Acrylsäure (1,60 kMol) zudosiert. Das Reaktionsgemisch wird 2,5 Stunden auf Siedetemperatur gehalten.

Molverhältnis: 1,0 Mol 1-Amino-ethan-1,1-diphosphonsäure
1,1 Mol Acrylsäure
2,7 Mol Kaliumhydroxid
12,6 Mol Wasser

Der Umsetzungsgrad, bezogen auf 1-Amino-ethan-1,1-diphosphonsäure, ist >95%. Es wird eine 40%ige Lösung mit einem pH-Wert von 6,7 erhalten. Das Kalkbindevermögen bei pH 10 beträgt 54 g Calcium pro 100 g in der Lösung enthaltener Phosphonsäure.

## Beispiel 3

In 740 g 50%ige Kalilauge (6,60 Mol KOH, 20,56 Mol $H_2O$) werden unter Rühren 383 g 1-Amino-methan-1,1-diphosphonsäure (2,00 Mol) eingetragen. Zu der heißen Lösung werden 158,4 g Acrylsäure (2,20 Mol) dosiert. Das Gemisch wird 15 Minuten bei Rückflußtemperatur gehalten. Anschließend destilliert man 170 g Wasser ab.

Molverhältnis: 1,0 Mol 1-Amino-methan-1,1-diphosphonsäure
1,1 Mol Acrylsäure
3,3 Mol Kaliumhydroxid
5,6 Mol Wasser

Der Umsetzungsgrad, bezogen auf 1-Amino-methan-1,1-diphosphonsäure, ist >95%. Es wird eine 45%ige Lösung mit einem pH-Wert von 6,1 erhalten. Das Kalkbindevermögen bei pH 10 beträgt 31 g Calcium pro 100 g in Lösung enthaltener Phosphonsäure.

## Patentansprüche

1. Verfahren zur Herstellung von N-(Carboxy-alkyl)-1-amino-alkan-1,1-diphosphonsäuren der allgemeinen Formel

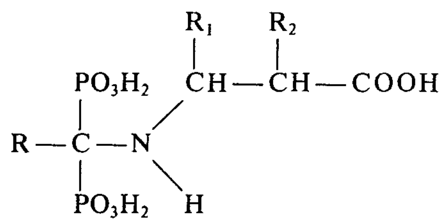

(I)

in der

R Wasserstoff oder niedrig Alkyl,
$R_1$ Wasserstoff oder niedrig Alkyl und
$R_2$ Wasserstoff oder niedrig Alkyl

bedeuten, bzw. deren Alkalisalzen oder Alkalisalzlösungen, durch Umsetzen von 1-Amino-alkan-1,1-diphosphonsäuren der allgemeinen Formel

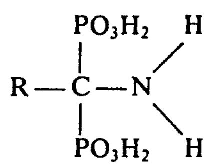

(II)

in der
R Wasserstoff oder niedrig Alkyl
bedeutet, mit einer ungesättigten Carbonsäure der allgemeinen Formel

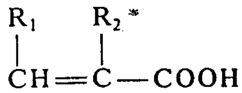

(III)

in der $R_1$ und $R_2$ obige Bedeutung haben, dadurch gekennzeichnet, daß man die Umsetzung in einem pH-Bereich von 5–7 durchführt.

2. Verfahren nach Anspruch 1, dadurch gekennzeichnet, daß man Verbindungen der allgemeinen Formel (II) und eine ungesättigte Carbonsäure der allgemeinen Formel (III) im Molverhältnis von 1 : 1 bis 1 : 1,3 miteinander umsetzt.

3. Verfahren nach Anspruch 1 oder 2, dadurch gekennzeichnet, daß pro Mol 1-Amino-alkan-1,1-diphosphonsäure 2,5 bis 3,5 Mol Alkalihydroxid bzw. Alkalicarbonat eingesetzt werden.

4. Verfahren nach einem der Ansprüche 1 bis 3, dadurch gekennzeichnet, daß man pro Mol 1-Amino-alkan-1,1-diphosphonsäure insgesamt 7–13 Mol Wasser einsetzt.

5. Verfahren nach Anspruch 1 bis 4, dadurch gekennzeichnet, daß man nach beendeter Umsetzung Wasser abdestilliert.

**Claims**

1. A process for the preparation of N-(carboxy-alkyl)-1-amino-alkane-1,1-diphosphonic acids of the general formula

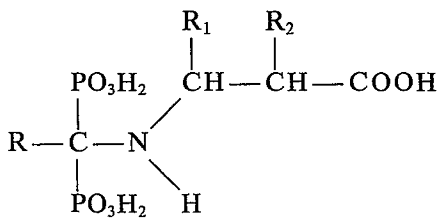

(I)

in which

R represents a hydrogen atom or a lower alkyl group,
$R_1$ represents a hydrogen atom or a lower alkyl group, and
$R_2$ represents a hydrogen atom or a lower alkyl group,

or their alkali salts or alkali salt solutions, by reacting 1-amino-alkane-1,1-diphosphonic acids of the general formula

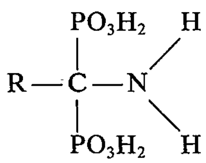

(II)

in which
R represents a hydrogen atom or a lower alkyl group,
with an unsaturated carboxylic acid of the general formula

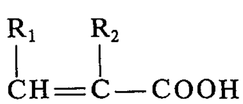

(III)

in which $R_1$ and $R_2$ have the meanings defined above, characterized in that the reaction is carried out at a pH of from 5 to 7.

2. A process according to Claim 1, characterized in that the compounds of general formula (II) and the unsaturated carboxylic acid of general formula (III) are reacted together in a molar ratio of from 1 : 1 to 1 : 1.3.

3. A process according to Claim 1 or 2, characterized in that from 2.5 to 3.5 mole of an alkali hydroxide or alkali carbonate is added per mole of 1-amino-alkane-1,1-diphosphonic acid.

4. A process according to any one of Claims 1 to 3, characterized in that a total of from 7 to 13 mole of water is added per mole of 1-amino-alkane-1,1-diphosphonic acid.

5. A process according to Claims 1 to 4, characterized in that water is distilled off after the reaction is completed.

**Revendications**

1. Procédé de préparation d'acides N-(carboxy-alkyl)-1-amino-alcane-1,1-diphosphoniques de formule générale:

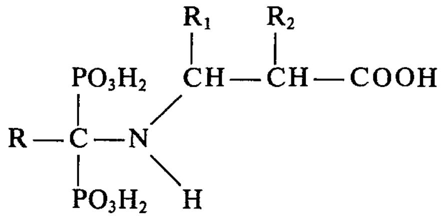

(I)

dans laquelle R, $R_1$ et $R_2$ représentent chacun l'hydrogène ou un alkyle inférieur, et de leurs sels alcalins ou de solutions de leurs sels alcalins, par réaction d'acides 1-amino-alcane-1,1-diphosphoniques de formule générale:

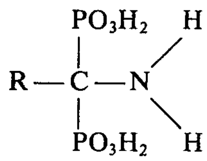

(II)

R désignant l'hydrogène ou un alkyle inférieur, avec un acide carboxylique insaturé de formule générale:

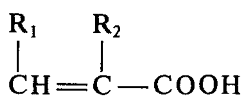

(III)

$R_1$ et $R_2$ ayant les significations ci-dessus, procédé caractérisé en ce qu'on effectue la réaction à un pH compris entre 5 et 7.

2. Procédé selon la revendication 1, caractérisé en ce qu'on fait réagir les composés II et III dans un rapport molaire compris entre 1 : 1 et 1 : 1,3.

3. Procédé selon la revendication 1 ou 2, caractérisé en ce que, par mole de l'acide 1-amino-alcane-1,1-diphosphonique, on met en œuvre 2,5 à 3,5 moles d'un hydroxyde ou d'un carbonate de métal alcalin.

4. Procédé selon l'une quelconque des revendications 1 à 3, caractérisé en ce que l'on met en œuvre 7 à 13 moles d'eau par mole de l'acide 1-amino-alcane-1,1-diphosphonique.

5. Procédé selon une l'une quelconque des revendications 1 à 4, caractérisé en ce qu'après la réaction, on élimine l'eau par distillation.